# EUROPÄISCHE PATENTSCHRIFT

(11) **EP 1 356 212 B1**
(45) Veröffentlichungstag und Bekanntmachung des Hinweises auf die Patenterteilung: **18.05.2005**
(21) Anmeldenummer: 02702293.8
(22) Anmeldetag: 22.01.2002
(51) Int. Cl.: F16D 48/02

(54) **AUF HYDRAULISCHEM WEGE BETÄTIGBARES KUPPLUNGSSYSTEM**
HYDRAULICALLY OPERATED CLUTCH SYSTEM
SYSTEME D'EMBRAYAGE A ACTIONNEMENT HYDRAULIQUE

(30) Priorität: 30.01.2001 DE 10103843
(43) Veröffentlichungstag der Anmeldung: 29.10.2003
(73) Patentinhaber: ZF Sachs AG, 97424 Schweinfurt (DE)
(72) Erfinder: EBERT, Angelika, 97421 Schweinfurt (DE); KUHSTREBE, Jochen, 97318 Westheim (DE); BUSOLD, Thomas, 36039 Fulda (DE)
(86) Internationale Anmeldenummer: PCT/EP2002/000579
(87) Internationale Veröffentlichungsnummer: WO 2002/061299

(56) Entgegenhaltungen:
- EP-A- 0 144 241
- US-A- 4 591 038
- US-A- 4 625 840
- US-A- 5 105 922
- US-A- 6 079 206

## Beschreibung

### [Technisches Gebiet]

Die vorliegende Erfindung betrifft ein Kupplungssystem, umfassend eine Kupplungseinrichtung insbesondere für die Anordnung in einem Antriebsstrang zwischen einer Antriebseinheit und einem Getriebe, sowie umfassend eine Betätigungseinrichtung zur Betätigung der Kupplungseinrichtung auf hydraulischem Wege vermittels wenigstens eines hydraulischen Nehmerzylinders, wobei die Betätigungseinrichtung eine Hydraulikmedium-Bereitstelleinrichtung zum Bereitstellen von unter Druck stehendem Hydraulikmedium und eine Ventilanordnung aufweist, unter deren Vermittlung dem Nehmerzylinder Hydraulikmedium zuführbar und Hydraulikmedium vom Nehmerzylinder abführbar ist.

### [Stand der Technik]

Es sind bereits Kupplungssysteme bekannt (z.Bsp. US 5 104 922, die ein Kupplungsystem nach dem Oberbegriff des Anspruchs 1 offenbart), welche getrennte Ventile zum Befüllen und Entleeren eines Kupplungszylinders aufweisen. Hierbei sind jeweils ein Zuführventil und ein Abführventil als zwei getrennte einfache AN/AUS-Ventile ausgeführt. Nachteilig hierbei ist jedoch, dass zu einer ausreichend feinfühligen Ansteuerung des Kupplungsdruckes ein zusätzlicher kosten- und bauraumaufwendiger Druckspeicher nötig ist.
Es bietet sich daher an, die Ventilanordnung mit wenigstens einem zur Steuerung/Regelung des Zuflusses an Hydraulikmedium in den Nehmerzylinder bzw. zur Steuerung/Regelung der Abfuhr von Hydraulikmedium aus dem Nehmerzylinder dienenden Proportionalventil auszuführen, da Proportionalventile verfügbar sind, die eine sehr feine Dosierung des in den Nehmerzylinder fließenden Hydraulikmediums bzw. des aus dem Nehmerzylinder abfließenden Hydraulikmediums erlauben und demgemäß die Kupplungseinrichtung sehr feinfühlig im Sinne eines Ausrückens bzw. Einrückens betätigbar ist. So wurden beispielsweise herkömmliche automatisierte Kupplungssysteme durch Proportional-Wege-/Druckventile betätigt

Proportional-Wege-/Druckventile müssen allerdings unter Einhaltung enger Toleranzen gefertigt werden und sind damit vergleichsweise kostenaufwendig. Ferner sind bei den meisten Proportionalventilen oder Servoventilen die Leckage- und Steuerölverluste relativ hoch. Wenn die Kupplung betätigt (eingerückt im Falle einer Kupplung des NORMALERWEISE-OFFEN-Typs bzw. ausgerückt im Falle einer Kupplung des NORMALERWEISE-GESCHLOSSEN-Typs) bleiben soll, muss dementsprechend die in der Regel eine Hydraulikpumpe aufweisende Hydraulikmedium-Bereitstelleinrichtung ständig ein bestimmtes Druckniveau aufrecht erhalten.

Ein anderer Aspekt ist die Entlüftung des Hydrauliksystems, insbesondere des hydraulischen Nehmerzylinders des Kupplungssystems. Herkömmliche Kupplungssysteme mit einem kupplungspeddalbetätigbaren Geberzylinder wurden durch mehrmaliges Betätigen des Kupplungspedals entlüftet. Eine andere Möglichkeit ist, das Kupplungssystem durch Einsatz einer Vakuum-Befülleinrichtung betriebsbereit zu machen. Eine derartige Vakuum-Befülleinrichtung wird insbesondere für herkömmliche Kupplungssysteme, insbesondere Nasslauf-Kupplungssysteme, ohne Kupplungspedal erforderlich sein. Eine derartige Vakuum-Befülleinrichtung ist allerdings relativ teuer und wird nicht von allen Werkstätten bereitgehalten werden können. Auch die herkömmliche Entlüftung durch mehrmaliges Betätigen des Kupplungspedals ist, sofern diese Möglichkeit der Entlüftung überhaupt noch gegeben ist, zumindest dahingehend nachteilig, dass sie vergleichsweise viel Zeit benötigt und aufgrund von Nachlässigkeiten des Personals in der Praxis Fehler auftreten können, bei denen der Nehmerzylinder nicht vollständig entlüftet ist.

### [Aufgabe der Erfindung]

Demgegenüber liegt der vorliegenden Erfindung die Aufgabe zugrunde, ein einfaches, ggf. selbsttätiges, Entlüften des Nehmerzylinders zu ermöglichen oder/und ein Kupplungssystem mit einer einfach aufgebauten Ventilanordnung bereitzustellen, die kostengünstig ausgeführt werden kann.

### [Darstellung der Erfindung]

Zur Lösung dieser Aufgabe wird erfindungsgemäß vorgeschlagen, dass die Ventilanordnung wenigstens ein in einer Hydraulikverbindung zwischen der Hydraulikmedium-Bereitstelleinrichtung und dem Nehmerzylinder angeordnetes Zuführventil und wenigstens ein in einer Hydraulikverbindung zwischen dem Nehmerzylinder und einer Hydraulikmediumaufnahme angeordnetes, gegenüber dem Zuführventil gesondertes Abführventil aufweist, wobei das Zuführventil oder/und das Abführventil als Proportionalventil ausgeführt ist

Die erfindungsgemäße Ventilanordnung ermöglicht, dass zur Entlüftung des Nehmerzylinders das Zuführventil und das Abführventil über einen gewissen Zeitraum beide gemeinsam geöffnet gehalten werden, so dass ein den Nehmerzylinder passierender oder an einem Anschluss des Nehmerzylinders vorbeifließender, den Nehmerzylinder entlüftender Hydraulikmediumstrom auftreten kann. Femer ermöglicht die Ausführung der Ventilanordnung mit dem Zuführventil und dem demgegenüber gesonderten Abführventil, dass Ventile einfacher Bauart, zur Realisierung der Ventilanordnung verwendet werden können.

Es wird speziell an ein Proportional-Ventil der Bauart gedacht, bei der wenigstens ein Ventilelement zur Variation einer Öffnungsquerschnittsfläche Zwischenstellungen zwischen einer maximalen Öffnungsstellung und einer Schließstellung einnehmen kann und das aufgrund seiner Bauart ähnlich einem Sitzventil aber vergleichsweise geringe Steuerölverluste aufweist. Bei einem entsprechenden bekannten Proportional-Ventil ist der Weg eines als Ventitelement dienenden Stößels proportional zum Steuerstrom, und die effektive Öffnungsquerschnittsfläche ändert sich entlang dem Weg des Stößels (vorzugsweise wird eine effektive Öffnungsquerschnittsfläche erreicht, die proportional zum Strom ist).

Der Erfindung liegt die Erkenntnis zugrunde, dass bei Verwendung eines Zuführventils und eines Abführventils, die unabhängig voneinander betätigbar sind, die Kupplungseinrichtung auch unter Verzicht auf ein für die exakte und feinfühlige Dosierung der Kupplungsbetätigung an sich ideales Proportional-Wege-/Druckventil hinreichend feinfühlig und exakt dosiert betätigbar ist, wenn das Zuführventil und das Abführventil im Bedarfsfall aufeinander abgestimmt betätigbar sind.

Herkömmlich wurden einfache AN/AUS-Ventile oder Schaltventile im Zusammenhang mit den den einzelnen Gängen eines automatischen Getriebes zugeordneten, getriebeintemen Kupplungen (US 6,093,133) und bei pneumatisch betätigten Kraftfahrzeug-Reibungskupplungen (DE 30 28 251 C2) verwendet. Aufgrund der "binären" Kupplungsbetätigung bei den getriebeintemen Kupplungen (die Kupplungen nehmen nur die Zustände VOLLSTÄNDIG EINGEKUPPELT und VOLLSTÄNDIG AUSGEKUPPELT ein)und der Kompressibilität des bei pneumatisch betätigten Kupplungen eingesetzten Pneumatikmediums stellt sich das Problem der exakten und feinfühligen Dosierung der Kupplungsbetätigung bei den bekannten Systemen nicht oder auf ganz andere Weise. Demgemäss sind bei diesen Systemen keine Vorkehrungen für eine im Sinne der vorliegenden Erfindung aufeinander abgestimmte Betätigung der AN/AUS-Ventile getroffen.

Als besonders bevorzugt wird vorgeschlagen, dass das Kupplungssystem eine Steuer/Regel-Einheit aufweist, die dafür eingerichtet ist, das Zuführventil und das Abführventil aufeinander abgestimmt derart zu betätigen, dass ein innerhalb eines Bezugszeitintervalls dem Nehmerzylinder zugeführtes effektives Hydraulikmedium-Volumeninkrement kleiner ist als ein in dem Bezugszeitintervall durch das Zuführventil dosierbares minimales Hydraulikmedium-Volumeninkrement, oder/und dass ein innerhalb eines/des Bezugszeitintervalls vom Nehmerzylinder abgeführtes effektives Hydraulikmedium-Volumendekrement kleiner ist als ein in dem Bezugszeitintervall durch das Abführventil dosierbares minimales Hydraulikmedium-Volumendekrement. Es wird insbesondere daran gedacht, dass die Steuer/Regel-Einheit dafür ausgelegt ist, die Ventile derart zu betätigen, dass ein in dem Bezugszeitintervall durch das Zuführventil durchgelassenes Hydraulikmediumvolumen und ein in dem Bezugszeitintervall durch das Abführventil durchgelassenes Hydraulikmediumvolumen jeweils größer sind als ein vom betreffenden Ventil dosierbares minimales Durchlass-Hydrautikmediumvotumen, und dass ein in dem Bezugszeitintervall in den Nehmerzylinder zugeführtes oder aus dem Nehmerzylinder abgeführtes Hydraulikmediumvolumen kleiner ist als das vom Zuführventil dosierbare minimale Durchlass-Hydraulikmediumvolumen oder/und das vom Abführventil dosierbare minimale Durchlass-Hydraulikmediumvolumen.

Nach diesem Erfindungsvorschlag ist es möglich, besonders einfache, hinsichtlich ihrer Betätigung relativ träge Ventile zu verwenden, die für sich alleine das für die erforderliche Feinfühligkeit der Kupplungsbetätigung benötigte minimale Hydraulikmedium-Volumeninkrement bzw. Hydraulikmedium-Volumendekrement nicht dosieren könnten. Diesem Erfindungsvorschlag liegt die Überlegung zugrunde, dass es für die Feinfühligkeit und Exaktheit der Kupplungsbetätigung nur auf das tatsächlich dem Nehmerzylinder zugeführte bzw. hieraus abgeführte Hydraulikmedium ankommt, nicht aber auf das durch das einzelne Ventil fließende Hydraulikmedium.

Das Bezugszeitintervall kann in der Größenordnung eines bauartbedingten minimalen Öffnungszeitintervalls des Zuführventils oder/und des Abführventils liegen oder diesem minimalen Öffnungszeitintervall im Wesentlichen entsprechen. Das minimale Öffnungszeitintervall des Zuführventils bzw. des Abführventils kann das durch dieses Ventil dosierbare minimale Durchlass-Hydraulikmediumvolumen bzw. das durch dieses Ventil dosierbare minimale Hydraulikmedium-Volumeninkrement bzw. Hydraulikmedium-Volumendekrement bestimmen oder mitbestimmen.

Vorzugsweise ist die Steuer/Regel-Einheit dafür ausgelegt, die Ventile zeitlich aufeinander abgestimmt derart zu betätigen, dass i) für die Zufuhr eines Hydraulikmedium-Volumeninkrement zum Nehmerzylinder, das kleiner ist als das durch das Zuführventil dosierbare minimale Hydraulikmedium-Volumeninkrement, das Abführventil gegenüber dem Zuführventil um ein Versatzzeitintervall später geöffnet wird oder/und das Abführventil gegenüber dem Zuführventil um ein Versatzzeitintervall eher geschlossen wird; oder/und dass ii) für die Abfuhr eines Hydraulikmedium-Volumendekrement vom Nehmerzylinder, das kleiner ist als das durch das Abführventil dosierbare minimale Hydraulikmedium-Volumendekrement, das Zuführventil gegenüber dem Abführventil um ein Versatzzeitintervall später geöffnet wird oder/und das Zuführventil gegenüber dem Abführventil um ein Versatzzeitintervall eher geschlossen wird. Das Versatzzeitintervall kann deutlich kleiner als das bauartbedingte minimale Öffnungszeitintervall des Zuführventils oder/und des Abführventils sein.

Bezug nehmend auf die oben angesprochene Entlüftung des Nehmerzylinders wird vorgeschlagen, dass eine/die Steuer/Regel-Einheit des Kupplungssystems dafür ausgelegt ist, in einem Entlüftungsbetriebszustand das Zuführventil und das Abführventil zur Entlüftung des Nehmerzylinders über ein Entlüftungszeitintervall geöffnet zu halten, so dass ein den Nehmerzylinder passierender oder an einem Anschluss des Nehmerzylinders vorbeifließender, den Nehmerzylinder entlüftender Hydraulikmediumstrom auftritt. Vorzugsweise ist die Steuer/Regel-Einheit dafür ausgelegt, durch entsprechende Ansteuerung des Zuführventils oder/und des Abführventils oder/und der Hydraulikmedium-Bereitstelleinrichtung Druckschwankungen oder/und Schwankungen des Volumenstroms des den Nehmerzylinder passierenden bzw. an dessen Anschluss vorbeifließenden Hydraulikmediumstroms zu erzeugen, um die Entlüftung des Nehmerzylinders zu unterstützen.

Eine/die Steuer/Regel-Einheit des Kupplungssystems kann dafür ausgelegt sein, in einem Halten-Betriebszustand bei geschlossenem Zuführventil und geschlossenem Abführventil die Hydraulikmedium-Bereitstelleinrichtung in einen Bereitschaftszustand zu versetzen, in dem die Hydraulikmedium-Bereitstelleinrichtung weniger Leistung aufnimmt als in einem Hydraulikmedium-Zuführzustand, in dem über das Zuführventil Hydraulikmedium zugeführt wird.

Die Erfindung ist im Prinzip universell auf hydraulisch betätigte Kraftfahrzeug-Reibungskupplungen verschiedenster Bauart anwendbar. So kann der Nehmerzylinder beispielsweise über eine Ausrücklageranordnung auf eine Kraftfahrzeug-Reibungskupplung wirken. Es wird aber vor allem an ein solches Kupplungssystem gedacht, bei dem der Nehmerzylinder in eine sich im Betrieb mitdrehende Bauteilgruppe der Kupplungseinrichtung integriert ist Das Zuführventil und das Abführventil können gegenüber der Bauteilgruppe stationär angeordnet und über eine Drehverbindung am Nehmerzylinder angeschlossen sein.

Bei der Kupplungseinrichtung kann es sich um eine sogenannte Mehrfach-Kupplungseinrichtung oder Doppel-Kupplungseinrichtung handeln. Die Kupplungseinrichtung kann demgemäß wenigstens einen einer ersten Kupplungsanordnung zugeordneten ersten Nehmerzylinder und wenigstens einen einer zweiten Kupplungsanordnung zugeordneten zweiten Nehmerzylinder aufweisen. Für eine solche Kupplungseinrichtung wird vorgeschlagen, dass die Ventilanordnung wenigstens ein in einer Hydraulikverbindung zwischen der Hydraulikmedium-Bereitstelleinrichtung und dem ersten Nehmerzylinder angeordnetes erstes Zuführventil und wenigstens ein in einer Hydraulikverbindung zwischen dem ersten Nehmerzylinder und der Hydraulikmediumaufnahme angeordnetes, gegenüber dem ersten Zuführventil gesondertes erstes Abführventil aufweist und dass die Ventilanordnung wenigstens ein in einer Hydraulikverbindung zwischen der Hydraulikmedium-Bereitstelleinrichtung und dem zweiten Nehmerzylinder angeordnetes zweites Zuführventil und wenigstens ein in einer Hydraulikverbindung zwischen dem zweiten Nehmerzylinder und der Hydraulikmediumaufnahme angeordnetes, gegenüber dem zweiten Zuführventil gesondertes zweites Abführventil aufweist. Die erste Kupplungsanordnung kann einer ersten Getriebeeingangswelle und die zweite Kupplungsanordnung kann einer zweiten Getriebeeingangswelle eines Lastschaltgetriebes zugeordnet sein. Die Kupplungsanordnung kann wenigstens eine nasslaufende Kupplungsanordnung, insbesondere Lamellenkupplungsanordnung, aufweisen. Eine derartige Ausbildung der Kupplungseinrichtung ist insbesondere im Falle einer Mehrfach- oder Doppel-Kupplungseinrichtung für die erste und die zweite Kupplungsanordnung vorteilhaft.

Die Erfindung wird im Folgenden anhand in den Figuren gezeigten Ausführungsbeispielen näher ertäutert.
- Fig. 1: zeigt schematisch einen hydraulischen Nehmerzylinder eines Kupplungssystems samt einer nicht erfindungsgemäßen Ventilanordnung, die ein Zuführventil und ein Abführventil umfasst.
- Fig. 2: ist ein schematisches Diagramm, das zur Veranschaulichung einer aufeinander abgestimmten Betätigung des Zuführventils und des Abführventils dient.
- Fig. 3: zeigt in einer schematischen Darstellung ein Ausführungsbeispiel eines erfindungsgemäßen Kupplungssystems mit einer hydraulisch betätigbaren Doppelkupptung.
- Fig. 4: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die Bestandteil eines erfindungsgemäßen Kupplungssystems sein könnte, etwa des Kupplungssystems der Fig. 3.

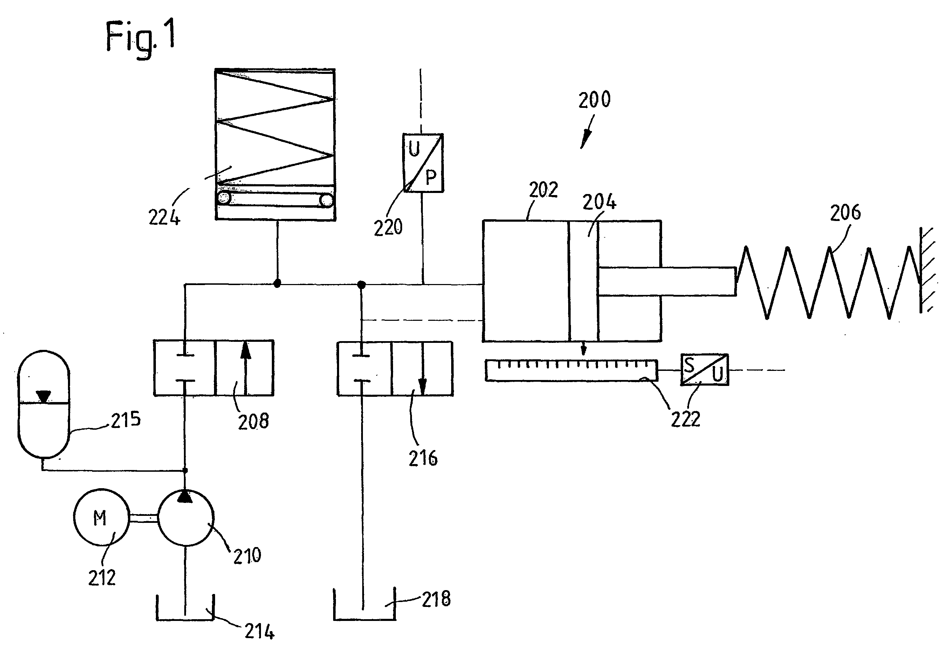

Fig. 1 zeigt eine Betätigungseinrichtung für die Betätigung einer Kraftfahrzeug-Reibungskupplung (nicht im Einzelnen dargestellt) vermittels eines hydraulischen Nehmerzylinders 202, der einen Betätigungskolben 204 aufweist. Die Art und Weise, wie der Betätigungskolben mit zugeordneten Kupplungskomponenten zusammenwirkt, ist im Zusammenhang mit der vorliegenden Erfindung ohne Interesse. Es kann sich bei der Kupplung um eine Kupplung des NORMALERWEISE-OFFEN-Typs oder des NORMALERWEISE-GESCHLOSSEN-Typs handeln. Eine Rückstellfederanordnung ist bei 206 symbolhaft angedeutet, die im Falle einer Kupplung des NORMALERWEISE-OFFEN-Typs die Kupplung ausrückt bzw. im Falle einer Kupplung des NORMALERWEISE-GESCHLOSSEN-Typs die Kupplung einrückt.

Der hydraulische Nehmerzylinder 202 ist über ein Zuführventil 208 an einer Hydraulikdrucköl bereitstellenden Hydraulikpumpe 210 angeschlossen, die von einem Motor 212 angetrieben wird. Die Hydraulikpumpe 210 saugt Hydrauliköl aus einem Reservoir 214 an. Es kann ein Hydrospeicher 215 vorgesehen sein, der kurzfristige Druck/Volumenspitzen bereitstellen kann und so ermöglicht, dass die Pumpe 210 schwächer ausgelegt werden kann. Ferner ist ein derartiger Hydrospeicher vorteilhaft, da er Druckstöße abdämpft. Der hydraulische Nehmerzylinder 202 ist ferner über ein Abführventil 216 an einem Reservoir 218 angeschlossen. Die Reservoire 214, 218 können von einem gemeinsamen Reservoir (Ölsumpf) gebildet sein.

Das Zuführventil 208 dient zur Steuerung/Regelung des Ölzuflusses von der Pumpe 210 zum Nehmerzylinder 202. Das Abführventil 216 dient zur Steuerung/Regelung des Abflusses von Öl aus dem hydraulischen Nehmerzylinder 202 in das Reservoir 218. Beim in Fig. 1 gezeigten Ausführungsbeispiel sind das Zuführventil 208 und das Abführventil 216 jeweils von einem AN/AUS-Ventil (ON/OFF-Ventil) gebildet (Dieses Beispiel ist nicht erfindungsgemäß.). Die beiden AN/AUS-Ventile können vom NORMALERWEISE-OFFEN-Typ oder vom NORMALERWEISE-GESCHLOSSEN-Typ sein. Es ist auch möglich, dass eines der beiden Ventile vom NORMALERWEISE-OFFEN-Typ und das andere vom NORMALERWEISE-GESCHLOSSEN-Typ ist.

Ist das kleinste mittels dem Zuführventil bzw. dem Abführventil dosierbare Volumeninkrement bzw. Volumendekrement, also das in Richtung zum Nehmerzylinder durchgelassene Ölvolumen bzw. in Richtung zum Reservoir 218 durchgelassene Ölvolumen zu groß, als für die gewünschte Betätigung der Kupplung an sich erforderlich ist (dies würde zu einem zu großen Druckanstieg bzw. Abfall und dementsprechend zu einem zu starken Ausrücken bzw. Einrücken der Kupplung führen), kann durch kombinierte Betätigung beider Ventile erreicht werden, dass dem hydraulischen Nehmerzylinder das richtige Ölvolumen zugeführt wird bzw. das richtige Ölvolumen aus dem Nehmerzylinder abgelassen wird. Soll beispielsweise dem hydraulischen Nehmerzylinder das Ölvolumen Vₛₒₗₗ zugeführt werden, und ist dies Soll-Volumen kleiner als das von dem Zuführventil 208 minimal dosierbare Volumen Vₘᵢₙ (minimales Durchlassvolumen Vₘᵢₙ des Zuführventils 208), so kann über das Zuführventil 208 beispielsweise das Gesamtvolumen V₀ = V₁ + Vₛₒₗₗ zugeführt werden und über das Abführventil 216 hierauf abgestimmt das Volumen V₁ zum Reservoir 218 abgelassen werden, um dem hydraulischen Nehmerzylinder 202 im Endeffekt genau das Soll-Volumen Vₛₒₗₗ zuzuführen. Das über das Abführventil 216 abzuführende Teilvolumen V₁ muss mindestens gleich dem minimal dosierbaren Volumen Vₘᵢₙ des Abführventils 216 sein. Ohne Beschränkung der Allgemeinheit kann hier angenommen werden, dass das Zuführventil 208 und das Abführventil 216 das gleiche minimal dosierbare Durchlassvolumen Vₘᵢₙ aufweisen. In diesem Fall muss über das Zuführventil 208 mindestens das Volumen V₀ = Vₘᵢₙ + Vₛₒₗₗ zugeführt werden, von dem das Teilvolumen Vₘᵢₙ über das Abführventil 216 zum Reservoir 218 abgelassen wird.

in entsprechender Weise kann durch kombinierte Betätigung der Ventile 208 und 216 ein Sollvolumen Vₛₒₗₗ aus dem hydraulischen Nehmerzylinder 202 abgelassen werden, das kleiner als das vom Abführventil 216 minimal dosierbare Volumen Vₘᵢₙ (minimales Durchlassvolumen Vₘᵢₙ des Abführventils 216) ist. Hierzu wird über das Zuführventil 208 ein Ölvolumen V₁ zugeführt und hierauf abgestimmt über das Abführventil 216 ein Ölvolumen V₀ = V₁ + Vₛₒₗₗ abgelassen. Das über das Zuführventil 208 zugeführte Ölvolumen muss mindestens gleich dem minimalen Durchlassvolumen Vₘᵢₙ des Zuführventils 208 sein. Geht man wiederum davon aus, dass die beiden Ventile 208 und 216 das gleiche minimale Durchlassvolumen Vₘᵢₙ dosieren können, so muss über das Abführventil 216 mindestens das Volumen V₀ = Vₘᵢₙ + Vₛₒₗₗ abgelassen werden, von dem das Teilvolumen Vₘᵢₙ dem über das Zuführventil 208 zugeführten Volumen entspricht. Aus dem hydraulischen Nehmerzylinder 202 wird dann insgesamt nur das Sollvolumen Vₛₒₗₗ abgelassen.

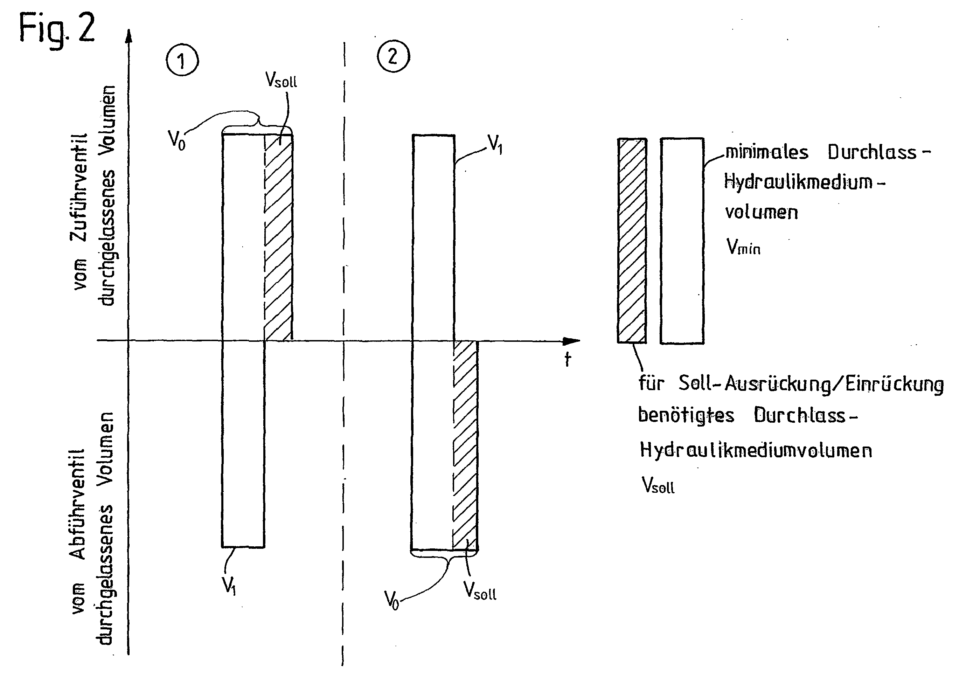

Die vorstehend erläuterte kombinierte Betätigung des Zuführventils und des Abführventils ist im Diagramm der Fig. 2 beispielhaft veranschaulicht. Um dem hydraulischen Nehmerzylinder das Soll-Volumen Vₛₒₗₗ zuzuführen, das kleiner ist als das minimale Durchlassvolumen Vₘᵢₙ des Zuführventils 208, wird gemäß Diagrammteil 1 über das Zuführventil 208 das Gesamtvolumen V₀ zugeführt und über das Abführventil 216 das Teilvolumen V₁, beispielsweise das minimale Durchlassvolumen Vₘᵢₙ, abgelassen. In entsprechender Weise wird zum Ablassen (Abführen) des Soll-Volumens Vₛₒₗₗ, das kleiner ist als das minimale Durchlassvolumen des Abführventils 216, gemäß Diagrammteil 2 über das Zuführventil 208 das Volumen V₁, beispielsweise das minimale Durchlassvolumen Vₘᵢₙ, zugeführt und über das Abführventil 216 das Gesamtvolumen V₀ abgelassen.

Um einen gewünschten Druck bzw. eine gewünschte Einrückung/Ausrückung der Kupplung einzustellen, können die Ventile 208 und 216 in Abhängigkeit von dem Messergebnis eines Drucksensors 220 oder/und in Abhängigkeit von dem Messergebnis eines Wegsensors 222 betätigt werden. Im Falle einer linearen Federkennlinie der Rückstellfeder 206 ist der vom Wegsensor 222 gemessene Weg im Wesentlichen proportional zum Druck.

Zur Gewährleistung einer guten Regelbarkeit/Steuerbarkeit der Kupplungsbetätigung kann ein Hydrodämpfer 224 (beispielsweise umfassend einen federbelasteten Kolben, eine Metallbalgfeder oder dergleichen) parallel zum hydraulischen Nehmerzylinder 202 angeschlossen sein. Durch einen derartigen Hydrodämpfer werden Druckspitzen im Hydrauliksystem abgedämpft.

Vorzugsweise ist eines der Ventile 208 und 216 als Sitzventile ausgeführt, die gegenüber üblicherweise verwendeten Proportional- oder Servoventilen eine stark reduzierte Leckage aufweisen. Dies ermöglicht, dass die Druckversorgungseinheit 210, 212 in einer Art Bereitschaftsmodus (Stand by-Modus) geschaltet werden kann, wenn die Ventile 208, 216 während eines längeren Halten-Betriebszustands des Nehmerzylinders 202 geschlossen sind. Auf diese Weise lässt sich der Energieverbrauch des Gesamtsystems reduzieren. Eine Reduktion des Energieverbrauchs des Gesamtsystems ergibt sich auch schon daraus, dass beim Ausführungsbeispiel AN/AUS-Ventile verwendet werden, die im Gegensatz zu üblichen Proportional- oder Servoventilen keine wesentlichen Steuerölverluste aufweisen.

Die Verwendung wenigstens eines Zuführventils und wenigstens eines demgegenüber gesonderten Abführventil bietet den besonderen Vorteil, dass bei der Erstbefüllung des Hydrauliksystems mit Hydrauliköl oder nach Reparaturarbeiten vermittels dieser Ventile eine einfache Entlüftung des Hydrauliksystems einschließlich des hydraulischen Nehmerzylinders 202 möglich ist. Zur Entlüftung werden beide Ventile geöffnet, so dass das Hydrauliksystem für einen gewissen Zeitraum andauernd von Öl durchflossen wird und der sich ergebende Ölstrom den Nehmerzylinder 202 entlüftet. Hierbei ist es nicht erforderlich, dass auch der Nehmerzylinder 202 selbst von einem Ölstrom durchflossen wird, sondern es reicht, wenn nur eine Zuleitung zum Nehmerzylinder existiert und der Ölstrom gewissermaßen am Nehmerzylinder vorbeigeleitet wird. Insbesondere für eine derartige Anschlusssituation des Nehmerzylinders ist es zweckmäßig, durch entsprechende Betätigung wenigstens eines der Ventile 208 und 216 oder/und der Druckversorgungseinheit 210, 212 Pulsationen des Ölvolumenstroms zu erzeugen, die Druckschwankungen im Nehmerzylinder hervorrufen und so die Entlüftung des Nehmerzylinders unterstützen. Im Hinblick auf eine wirkungsvolle und schnelle Entlüftung des Nehmerzylinders ist es aber durchaus auch sinnvoll, den Ölvolumenstrom durch den Nehmerzylinder zu leiten, wofür den Nehmerzylinder mit zwei Anschlüssen, einen für die Zufuhr von Öl über das Zuführventil 208 in den Nehmerzylinder und einen für die Abfuhr von Öl aus dem Nehmerzylinder über das Abführventil 216 in das Reservoir 218, auszuführen. Diese Ausgestaltungsmöglichkeit ist in Fig. 1 gestrichelt angedeutet.

Die erläuterte Selbstentlüftungsfunktion der Betätigungseinrichtung ist insofern besonders vorteilhaft, als dass für die Inbetriebnahme eine kostenaufwendige Vakuum-Befülleinrichtung verzichtet werden kann und demgemäß auch eine einfache Wartung in einer normal ausgestatteten Werkstatt erfolgen kann.

Bezug nehmend auf die im Zusammenhang mit dem Diagramm der Fig. 2 angesprochene kombinierte Betätigung des Zuführventils 208 und des Abführventils 216 sollen noch folgende, rein exemplarische Zahlenbeispiele gegeben werden. Das effektive Mindestzeitintervall, für das ein AN/AUS-Ventil z. B. bauartbedingt mindestens offen ist, beträgt beispielsweise 5 bis 10 ms. Diesem Zeitintervall entspricht beispielsweise (je nach Öldruck) ein typisches Mindest-Öldurchlassvolumen der Ventile von etwa 1 ml.

Für eine feinfühlige Steuerung/Regelung der Kupplungsbetätigung wird man, je nach Auslegung des Nehmerzylinders, beispielsweise Ölvolumeninkremente/Dekremente von etwa 10 µl dosieren müssen. Dieses minimale Soll-Volumen (Vₛₒₗₗ) beträgt beim hier gegebenen Zahlenbeispiel 1 % des durch das Zuführventil bzw. das Abführventil alleine dosierbaren Durchlassvolumens. Dieses für eine hinreichend feinfühlige Regelung/Steuerung der Kupplungsbetätigung benötigte Soll-Ölvolumen, das dem hydraulischen Nehmerzylinder zugeführt bzw. von diesem abgeführt wird, lässt sich auf die beschriebene Art und Weise durch kombinierte Betätigung des Zulauf- und des Ablauf-Ventils dosieren. Geht man von den vorstehend gegebenen Beispielszahlen aus, reicht hierfür ein Steuertakt von etwa 100 µs aus, auf dessen Grundlage die Ventile angesteuert werden.

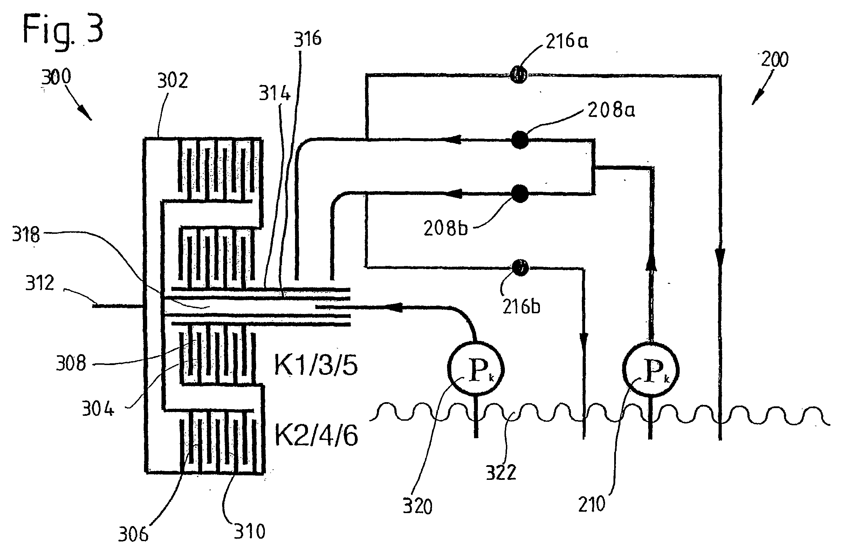

Fig. 3 zeigt ein Beispiel eines erfindungsgemäßen Kupplungssystems 300 mit einer Doppelkupplung 302, die eine radial innere Kupplungsanordnung 304 und eine radial äußere Kupplungsanordnung 306 aufweist. Die beiden Kupplungsanordnungen sind jeweils nur durch ein schematisch angedeutetes Lamellenpaket 308 bzw. 310 repräsentiert und dienen dazu, auf an sich bekannte Art und Weise eine Motorabtriebswelle 312 oder dergleichen mit einer zugeordneten Getriebeeingangswelle 314 bzw. 316 eines Lastschaltgetriebes oder dergleichen zur Momentenübertragung zu verbinden. Die radial innere Kupplungsanordnung 304 ist beispielsweise den Getriebegängen 1, 3 und 5 und die radial äußere Kupplungsanordnung 306 ist beispielsweise den Getriebegängen 2, 4 und 6 zugeordnet. Die Getriebeeingangswellen 314 und 316 sind als koaxial geschachtelte Hohlwellen ausgeführt. Über einen darin ausgebildeten Ölkanal 318 kann mittels einer Kühlölpumpe 320 Kühlöl aus einem Ölsumpf 322 den Lamellenpaketen 308 und 310 zugeführt werden.

In die Doppelkupplung 302 sind zwei hydraulische Nehmerzylinder integriert, die jeweils einen einem der beiden Lamellenpakete zugeordneten Betätigungskolben aufweisen und dazu dienen, das jeweilige Lamellenpaket gegen die Wirkung einer auf den Kolben wirkenden Rückstellfederanordnung einzuspannen (Kupplungsanordnung des NORMALERWEISE-OFFEN-Typs) oder das Lamellenpaket von der einspannenden Einwirkung einer Einkuppelfederanordnung zum Auskuppeln zu entlasten (Kupplungsanordnung des NORMALERWEISE-GESCHLOSSEN-Typs).

Dem hydraulischen Nehmerzylinder der radial äußeren Kupplungsanordnung 306 sind ein Zuführventil 208a und ein Abführventil 216a zugeordnet, die über eine Ölleitungsanordnung, eine nicht dargestellte Drehverbindung und einen in den geschachtelten Getriebeeingangswellen ausgebildeten Ölkanal an dem hydraulischen Nehmerzylinder angeschlossen sind. In entsprechender Weise ist dem hydraulischen Nehmerzylinder der radial inneren Kupplungsanordnung 304 ein Zuführventil 208b und ein Abführventil 216b zugeordnet, die über eine Ölleitungsanordnung, eine nicht dargestellte Drehverbindung und einen zwischen den geschachtelten Getriebeeingangswellen ausgebildeten Ölkanal am betreffenden hydraulischen Nehmerzylinder angeschlossen sind. Die Zuführventile 208a und 208b dienen dazu, dem jeweiligen hydraulischen Nehmerzylinder Drucköl von der Öl aus dem Reservoir 322 ansaugenden Druckölpumpe 210 zuzuführen. Die Abführventile 216a und 216b dienen dazu, Öl aus dem jeweiligen hydraulischen Nehmerzylinder zum Reservoir 322 abzulassen. In der im Zusammenhang mit Fig. 1 und 2 erläuterten Weise können das Zuführventil 208a und das Abführventil 216a in Kombination betätigt werden, um ein Soll-Volumeninkrement bzw. Soll-Volumendekrement einzustellen. In gleicher Weise können das Zuführventil 208b und das Abführventil 216b in Kombination betätigt werden, um ein Soll-Volumeninkrement bzw. Soll-Volumendekrement einzustellen. Ferner ermöglichen die Zuführ- und Abführventile, die hydraulischen Nehmerzylinder der Doppelkupplung auf einfache Weise zu entlüften. Die Betätigung der Ventile zur Einstellung der Soll-Volumeninkremente bzw. Soll-Volumendekremente bzw. zur Entlüftung des Nehmerzylinders erfolgt vorteilhaft durch eine entsprechend ausgelegte, die Ventile ansteuernde Steuer/Regel-Einheit (nicht dargestellt), die auf Grundlage eines Mikroprozessors realisiert sein kann.

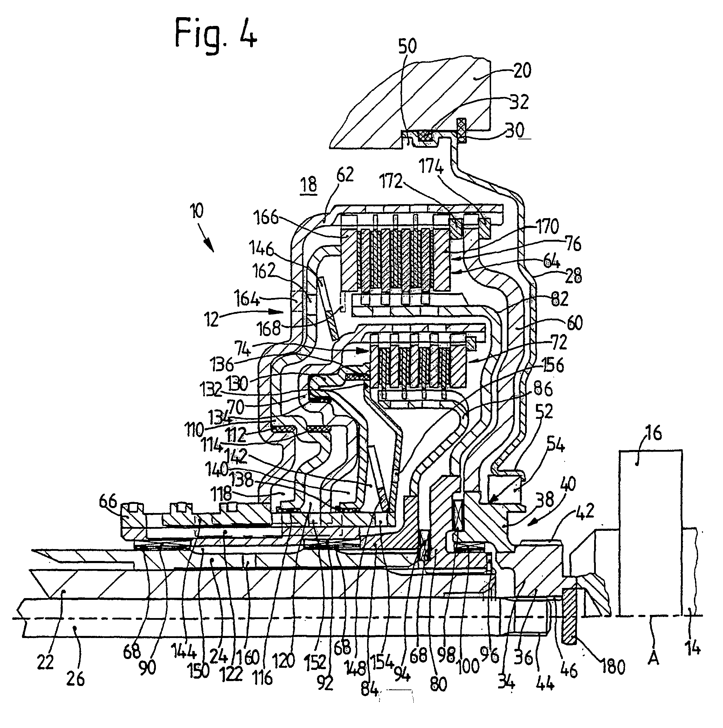

Ein Beispiel einer Mehrfach-Kupplungseinrichtung, die als Teil eines erfindungsgemäßen Kupplungssystems eingesetzt werden kann, wird im Folgenden anhand der Fig. 4 näher erläutert. Es handelt sich speziell um eine Doppel-Kupplungseinrichtung, kurz Doppelkupplung.

Fig. 4 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 4 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 4 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 4 nicht dargestellten Ölpumpe (etwa die Ölpumpe 220) dient, wie noch näher erläutert wird. Ist wenigstens eine elektromotorisch angetriebene Ölpumpe vorgesehen, kann auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 4 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 4 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 4 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines lnnenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 4 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer zugeordneten Ventilanordnung, in Verbindung, wobei der Druckmediumskanal 122 über eine das Ringteil 66 aufnehmende, ggf. getriebefeste Anschlusshülse an der Ventilanordnung angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 4 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer zugeordneten Ventilanordnung angeschlossen. Mittels den Ventilanordnungen, die andererseits an einer Druckölquelle (etwa die Pumpe 210) und einem Reservoir (etwa das Reservoir 322) angeschlossen sind, kann an den beiden Druckkammern 118 und 140 wahlweise (ggf. auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von Seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 4 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das ggf. von der Pumpe 320 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 4 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen. Es wird hierzu darauf hingewiesen, dass Fig. 4 der vorliegenden Anmeldung der Fig. 1 dieser Anmeldungsserie entspricht.

## Patentansprüche

1. Kupplungssystem, umfassend eine Kupplungseinrichtung (302) insbesondere für die Anordnung in einem Antriebsstrang zwischen einer Antriebseinheit und einem Getriebe, sowie umfassend eine Betätigungseinrichtung (200) zur Betätigung der Kupplungseinrichtung auf hydraulischem Wege vermittels wenigstens eines hydraulischen Nehmerzylinders (202), wobei die Betätigungseinrichtung eine Hydraulikmedium-Bereitstelleinrichtung (210, 212) zum Bereitstellen von unter Druck stehendem Hydraulikmedium und eine Ventilanordnung (208, 216) aufweist, unter deren Vermittlung dem Nehmerzylinder Hydraulikmedium zuführbar und Hydraulikmedium vom Nehmerzylinder abführbar ist, wobei
die Ventilanordnung wenigstens ein in einer Hydraulikverbindung zwischen der Hydraulikmedium-Bereitstelleinrichtung (210) und dem Nehmerzylinder (202) angeordnetes Zuführventil (208) und wenigstens ein in einer Hydraulikverbindung zwischen dem Nehmerzylinder (202) und einer Hydraulikmediumaufnahme (218; 322) angeordnetes, gegenüber dem Zuführventil gesondertes Abführventil (216) aufweist, **dadurch gekennzeichnet, dass** das Zuführventil oder/und das Abführventil als Proportional-Ventil ausgeführt ist.

2. Kupplungssystem nach Anspruch 1, **dadurch gekennzeichnet, dass** das Zuführventil (208) und das Abführventil (216) unabhängig voneinander, aber im Bedarfsfall aufeinander abgestimmt betätigbar sind.

3. Kupplungssystem nach Anspruch 1 oder 2, **gekennzeichnet durch** eine Steuer/Regel-Einheit, die dafür eingerichtet ist, das Zuführventil (208) und das Abführventil (216) aufeinander abgestimmt derart zu betätigen, dass ein innerhalb eines Bezugszeitintervalls dem Nehmerzylinder (202) zugeführtes effektives Hydraulikmedium-Volumeninkrement kleiner ist als ein in dem Bezugszeitintervall **durch** das Zuführventil (208) dosierbares minimales Hydraulikmedium-Volumeninkrement, oder/und dass ein innerhalb eines/des Bezugszeitintervalls vom Nehmerzylinder (202) abgeführtes effektives Hydraulikmedium-Volumendekrement kleiner ist als ein in dem Bezugszeitintervall **durch** das Abführventil (216) dosierbares minimales Hydraulikmedium-Volumendekrement.

4. Kupplungssystem nach Anspruch 3, **dadurch gekennzeichnet, dass** die Steuer/Regel-Einheit dafür ausgelegt ist, die Ventile (208, 216) derart zu betätigen, dass ein in dem Bezugszeitintervall durch das Zuführventil (208) durchgelassenes Hydraulikmediumvolumen und ein in dem Bezugszeitintervall durch das Abführventil (216) durchgelassenes Hydraulikmediumvolumen jeweils größer sind als ein vom betreffenden Ventil dosierbares minimales Durchlass-Hydraulikmediumvolumen, und dass ein in dem Bezugszeitintervall in den Nehmerzylinder (202) zugeführtes oder aus dem Nehmerzylinder (202) abgeführtes Hydraulikmediumvolumen kleiner ist als das vom Zuführventil (208) dosierbare minimale Durchlass-Hydraulikmediumvolumen oder/und das vom Abführventil (216) dosierbare minimale Durchlass-Hydraulikmediumvolumen.

5. Kupplungssystem nach Anspruch 3 oder 4, **dadurch gekennzeichnet, dass** das Bezugszeitintervall in der Größenordnung eines bauartbedingten minimalen Öffnungszeitintervalls des Zuführventils (208) oder/und des Abführventils (216) liegt oder diesem minimalen Öffnungszeitintervall im Wesentlichen entspricht, und dass das minimale Öffnungszeitintervall des betreffenden Ventils das durch dieses Ventil (208 bzw. 216) dosierbare minimale Durchlass-Hydraulikmediumvolumen bzw. das durch dieses Ventil (208 bzw. 216) dosierbare minimale Hydraulikmedium-Volumeninkrement bzw. Hydraulikmedium-Volumendekrement bestimmt oder mitbestimmt.

6. Kupplungssystem nach einem der Ansprüche 3 bis 5, **dadurch gekennzeichnet, dass** die Steuer/Regel-Einheit dafür ausgelegt ist, die Ventile (208, 216) zeitlich aufeinander abgestimmt derart zu betätigen, dass
- für die Zufuhr eines Hydraulikmedium-Volumeninkrement zum Nehmerzylinder (202), das kleiner ist als das durch das Zuführventil (208) dosierbare minimale Hydraulikmedium-Volumeninkrement,
- das Abführventil (216) gegenüber dem Zuführventil (208) um ein Versatzzeitintervall später geöffnet wird oder/und
- das Abführventil (216) gegenüber dem Zuführventil (208) um ein Versatzzeitintervall eher geschlossen wird;
oder/und dass
- für die Abfuhr eines Hydraulikmedium-Volumendekrement vom - Nehmerzylinder (202), das kleiner ist als das durch das Abführventil (216) dosierbare minimale Hydraulikmedium-Volumendekrement,
- das Zuführventil (208) gegenüber dem Abführventil (216) um ein Versatzzeitintervall später geöffnet wird oder/und
- das Zuführventil (208) gegenüber dem Abführventil (216) um ein Versatzzeitintervall eher geschlossen wird.

7. Kupplungssystem nach Anspruch 6, **dadurch gekennzeichnet, dass** das Versatzzeitintervall deutlich kleiner ist als das bauartbedingte minimale Öffnungszeitintervali des Zuführventils (208) oder/und des Abführventils (216).

8. Kupplungssystem nach einem der Ansprüche 1 bis 7, **dadurch gekennzeichnet, dass** eine/die Steuer/Regel-Einheit des Kupplungssystems dafür ausgelegt ist, in einem Entlüftungsbetriebszustand das Zuführventil (208) und das Abführventil (216) zur Entlüftung des Nehmerzylinders über ein Entlüftungszeitintervall geöffnet zu halten, so dass (202) ein den Nehmerzylinder passierender oder an einem Anschluss des Nehmerzylinders vorbeifließender, den Nehmerzylinder entlüftender Hydraulikmediumstrom auftritt.

9. Kupplungssystem nach Anspruch 8, **dadurch gekennzeichnet, dass** die Steuer/Regel-Einheit dafür ausgelegt ist, durch entsprechende Ansteuerung des Zuführventils (208) oder/und des Abführventils (216) oder/und der Hydraulikmedium-Bereitstelleinrichtung (210, 212) Druckschwankungen oder/und Schwankungen des Volumenstroms des den Nehmerzylinder (202) passierenden bzw. an dessen Anschluss vorbeifließenden Hydraulikmediumstroms zu erzeugen, um die Entlüftung des Nehmerzylinders zu unterstützen.

10. Kupplungssystem nach einem der Ansprüche 1 bis 9, **dadurch gekennzeichnet, dass** eine/die Steuer/Regel-Einheit des Kupplungssystems dafür ausgelegt ist, in einem Halten-Betriebszustand bei geschlossenem Zuführventil (208) und geschlossenem Abführventil (216) die Hydraulikmedium-Bereitstelleinrichtung (210, 212) in einen Bereitschaftszustand zu versetzen, in dem die Hydraulikmedium-Bereitstelleinrichtung weniger Leistung aufnimmt als in einem Hydraulikmedium-Zuführzustand, in dem über das Zuführventil (208) Hydraulikmedium zugeführt wird.

11. Kupplungssystem nach Anspruch 1, **dadurch gekennzeichnet, dass** Zuführventil oder/und das Abführventil mit wenigstens einem Ventilelement ausgeführt ist, das zur Variation einer Öffnungsquerschnittsfläche Zwischenstellungen zwischen einer maximalen Öffnungsstellung und einer Schließstellung einnehmen kann.

12. Kupplungssystem nach einem der Ansprüche 1 bis 11, **dadurch gekennzeichnet, dass** der Nehmerzylinder in eine sich im Betrieb mitdrehende Bauteilgruppe der Kupplungseinrichtung (302) integriert ist und dass das Zuführventil (208a, 208b) und das Abführventil (216a, 216b) demgegenüber stationär angeordnet sind und über eine Drehverbindung am Nehmerzylinder angeschlossen sind.

13. Kupplungssystem nach einem der Ansprüche 1 bis 12, **dadurch gekennzeichnet, dass** die Kupplungseinrichtung wenigstens einen einer ersten Kupplungsanordnung (304) zugeordneten ersten Nehmerzylinder und wenigstens einen einer zweiten Kupplungsanordnung (306) zugeordneten zweiten Nehmerzylinder aufweist, dass die Ventilanordnung wenigstens ein in einer Hydraulikverbindung zwischen der Hydraulikmedium-Bereitstelleinrichtung (210) und dem ersten Nehmerzylinder angeordnetes erstes Zuführventil (208a) und wenigstens ein in einer Hydraulikverbindung zwischen dem ersten Nehmerzylinder und der Hydraulikmediumaufnahme (322) angeordnetes, gegenüber dem ersten Zuführventil gesondertes erstes Abführventil (216a) aufweist und dass die Ventilanordnung wenigstens ein in einer Hydraulikverbindung zwischen der Hydraulikmedium-Bereitstelleinrichtung (210) und dem zweiten Nehmerzylinder angeordnetes zweites Zuführventil (208b) und wenigstens ein in einer Hydraulikverbindung zwischen dem zweiten Nehmerzylinder und der Hydraulikmediumaufnahme (322) angeordnetes, gegenüber dem zweiten Zuführventil gesondertes zweites Abführventil (216b) aufweist.

14. Kupplungssystem nach Anspruch 13, **dadurch gekennzeichnet, dass** die die erste Kupplungsanordnung (304) einer ersten Getriebeeingangswelle (314) und die zweite Kupplungsanordnung (306) einer zweiten Getriebeeingangswelle (316) eines Lastschaltgetriebes zugeordnet ist.

15. Kupplungssystem nach einem der Ansprüche 1 bis 14, **dadurch gekennzeichnet, dass** die Kupplungseinrichtung wenigstens eine nasslaufende Kupplungsanordnung (304, 306), insbesondere Lamellenkupplungsanordnung (304, 306), aufweist.

## Claims

1. Clutch system, comprising a clutch device (302), in particular for arrangement in a drive train between a drive unit and a transmission, and comprising an actuating device (200) for actuating the clutch device hydraulically by means of at least one hydraulic slave cylinder (202), the actuating device having a hydraulic-medium supply device (210, 212) for supplying pressurized hydraulic medium and a valve arrangement (208, 216) which can be used to feed hydraulic medium to the slave cylinder and discharge hydraulic medium from the slave cylinder, the valve arrangement having at least one feed valve (208) which is arranged in a hydraulic connection between the hydraulic-medium supply device (210) and the slave cylinder (202), and at least one discharge valve (216) which is arranged in a hydraulic connection between the slave cylinder (202) and a hydraulic-medium receptacle (218; 322) and is separate from the feed valve, **characterized in that**, the feed valve and/or the discharge valve is/are designed as a proportional valve.

2. Clutch system according to Claim 1, **characterized in that** the feed valve (208) and the discharge valve (216) can be actuated independently of each other, but, if the need arises, can be actuated in coordination with each other.

3. Clutch system according to Claim 1 or 2, **characterized by** a control/regulating unit which is installed for the purpose of actuating the feed valve (208) and the discharge valve (216) in coordination with each other in such a manner that an effective hydraulic-medium volume increment fed to the slave cylinder (202) within a reference time interval is smaller than a minimum hydraulic-medium volume increment which can be metered by the feed valve (208) in the reference time interval, and/or in that an effective hydraulic-medium volume decrement which is discharged from the slave cylinder (202) within a/the reference time interval is smaller than a minimum hydraulic-medium volume decrement which can be metered by the discharge valve (216) in the reference time interval.

4. Clutch system according to Claim 3, **characterized in that** the control/regulating unit is configured for the purpose of actuating the valves (208, 216) in such a manner that a hydraulic-medium volume which is transmitted by the feed valve (208) in the reference time interval and a hydraulic-medium volume which is transmitted by the discharge valve (216) in the reference time interval are in each case larger than a minimum hydraulic-medium transmission volume which can be metered by the- relevant valve, and **in that** a hydraulic-medium volume which is fed into the slave cylinder (202) or is discharged from the slave cylinder (202) in the reference time interval is smaller than the minimum hydraulic-medium transmission volume which can be metered by the feed valve (208), and/or the minimum hydraulic-medium transmission volume which can be metered by the discharge valve (216).

5. Clutch system according to Claim 3 or 4, **characterized in that** the reference time interval is in the order of magnitude of a design-induced minimum opening time interval of the feed valve (208) and/or of the discharge valve (216) or essentially corresponds to this minimum opening time interval, and **in that** the minimum opening time interval of the relevant valve determines or participates in the determination of the minimum hydraulic-medium transmission volume which can be metered by this valve (208 or 216) and the minimum hydraulic-medium volume increment or hydraulic-medium volume decrement which can be metered by this valve (208 or 216).

6. Clutch system according to one of Claims 3 to 5, **characterized in that** the control/regulating unit is configured for the purpose of actuating the valves (208, 216) in coordination in terms of time with each other in such a manner that
- for feeding a hydraulic-medium volume increment to the slave cylinder (202) which is smaller than the minimum hydraulic-medium volume increment which can be metered by the feed valve (208),
- the discharge valve (216) is opened later than the feed valve (208) by a time-delay interval and/or
- the discharge valve (216) is closed earlier than the feed valve (208) by a time-delay interval;
and/or **in that**
- for discharging a hydraulic-medium volume decrement from the slave cylinder (202) which is smaller than the minimum hydraulic-medium volume decrement which can be metered by the discharge valve (216),
- the feed valve (208) is opened later than the discharge valve (216) by a time-delay interval and/or
- the feed valve (208) is closed earlier than the discharge valve (216) by a time-delay interval.

7. Clutch system according to Claim 6, **characterized in that** the time-delay interval is significantly smaller than the design-induced minimum opening time interval of the feed valve (208) and/or of the discharge valve (216).

8. Clutch system according to one of Claims 1 to 7, **characterized in that** a/the control/regulating unit of the clutch system is configured for the purpose of keeping the feed valve (208) and the discharge valve (216) open in a ventilation operating state in order to ventilate the slave cylinder over a ventilation time interval, so that a hydraulic-medium flow which passes through the slave cylinder (202) or flows past a connection of the slave cylinder and ventilates the slave cylinder occurs.

9. Clutch system according to Claim 8, **characterized in that** the control/regulating unit is configured for the purpose of producing, by means of corresponding activation of the feed valve (208) and/or of the discharge valve (216) and/or of the hydraulic-medium supply device (210, 212), pressure fluctuations and/or fluctuations of the volume flow of the hydraulic-medium flow passing through the slave cylinder (202) or flowing past the connection thereof, in order to assist the ventilation of the slave cylinder.

10. Clutch system according to one of Claims 1 to 9, **characterized in that** a/the control/regulating unit of the clutch system is configured for the purpose, in a holding operating state with the feed valve (208) closed and discharge valve (216) closed, of setting the hydraulic-medium supply device (210, 212) into a standby state in which the hydraulic-medium supply device consumes less power than in a hydraulic-medium feeding state in which hydraulic medium is fed via the feed valve (208).

11. Clutch system according to Claim 1, **characterized in that** the feed valve and/or the discharge valve is/are designed with at least one valve element which can take up intermediate positions between a maximum opening position and a closing position in order to vary an opening cross-sectional surface.

12. Clutch system according to one of Claims 1 to 11, **characterized in that** the slave cylinder is integrated in a group of components of the clutch device (302) which rotate at the same time during operation, and **in that** the feed valve (208a, 208b) and the discharge valve (216a, 216b) are arranged in a stationary manner with respect to said group of components and are connected to the slave cylinder via a rotational connection.

13. Clutch system according to one of Claims 1 to 12, **characterized in that** the clutch device has at least one first slave cylinder which is assigned to a first clutch arrangement (304) and at least one second slave cylinder which is assigned to a second clutch arrangement (306), **in that** the valve arrangement has at least one first feed valve (208a) which is arranged in a hydraulic connection between the hydraulic-medium supply device (210) and the first slave cylinder, and at least one first discharge valve (216a) which is arranged in a hydraulic connection between the first slave cylinder and the hydraulic-medium receptacle (322) and is separate from the first feed valve, and **in that** the valve arrangement has at least one second feed valve (208b) which is arranged in a hydraulic connection between the hydraulic-medium supply device (210) and the second slave cylinder and at least one second discharge valve (216b) which is arranged in a hydraulic connection between the second slave cylinder and the hydraulic-medium receptacle (322) and is separate from the second feed valve.

14. Clutch system according to Claim 13, **characterized in that** the the first clutch arrangement (304) is assigned to a first transmission input shaft (314) and the second clutch arrangement (306) is assigned to a second transmission input shaft (316) of a power shift transmission.

15. Clutch system according to one of Claims 1 to 14, **characterized in that** the clutch device has at least one wet-running clutch arrangement (304, 306), in particular a multidisc clutch arrangement (304, 306).

## Revendications

1. Système d'embrayage, comprenant un dispositif d'embrayage (302) à disposer notamment dans une ligne d'entraînement entre une unité d'entraînement et une boîte de vitesses, et comprenant un dispositif d'actionnement (200) pour actionner le dispositif d'embrayage par voie hydraulique au moyen d'au moins un cylindre hydraulique récepteur (202), le dispositif d'actionnement présentant un dispositif (210, 212) d'approvisionnement en fluide hydraulique pour l'approvisionnement en fluide hydraulique sous pression et un ensemble de soupapes (208, 216) par l'intermédiaire duquel du fluide hydraulique peut être apporté au cylindre récepteur et du fluide hydraulique peut être évacué du cylindre récepteur, sachant que l'ensemble de soupapes présente au moins une soupape d'alimentation (208), disposée dans une liaison hydraulique entre le dispositif (210) d'approvisionnement en fluide hydraulique et le cylindre récepteur (202), et au moins une soupape d'évacuation (216), séparée de la soupape d'alimentation et disposée dans une liaison hydraulique entre le cylindre récepteur (202) et un réceptacle (218 ; 322) de fluide hydraulique, **caractérisé en ce que** la soupape d'alimentation et/ou la soupape d'évacuation est (sont) réalisée(s) sous forme de soupape proportionnelle.

2. Système d'embrayage selon la revendication 1, **caractérisé en ce que** la soupape d'alimentation (208) et la soupape d'évacuation (216) peuvent être actionnées indépendamment l'une de l'autre, mais d'une manière mutuellement adaptée en cas de besoin.

3. Système d'embrayage selon la revendication 1 ou 2, **caractérisé par** une unité de commande/régulation qui est installée pour actionner la soupape d'alimentation (208) et la soupape d'évacuation (216) d'une manière mutuellement adaptée de telle sorte qu'un incrément effectif de volume de fluide hydraulique apporté au cylindre récepteur (202) pendant un intervalle de temps de référence est inférieur à un incrément minimal de volume de fluide hydraulique pouvant être dosé par la soupape d'alimentation (208) dans l'intervalle de temps de référence, et/ou qu'un décrément effectif de volume de fluide hydraulique évacué du cylindre récepteur (202) pendant un intervalle/l'intervalle de temps de référence est inférieur à un décrément minimal de volume de fluide hydraulique pouvant être dosé par la soupape d'évacuation (216) dans l'intervalle de temps de référence.

4. Système d'embrayage selon la revendication 3, **caractérisé en ce que** l'unité de commande/régulation est conçue pour actionner les soupapes (208, 216) de telle sorte qu'un volume de fluide hydraulique transmis par la soupape d'alimentation (208) dans l'intervalle de temps de référence et un volume de fluide hydraulique transmis par la soupape d'évacuation (216) dans l'intervalle de temps de référence sont respectivement supérieurs à un volume minimal de transmission de fluide hydraulique pouvant être dosé par la soupape concernée, et qu'un volume de fluide hydraulique apporté au cylindre récepteur (202) ou évacué du cylindre récepteur (202) dans l'intervalle de temps de référence est inférieur au volume minimal de transmission de fluide hydraulique pouvant être dosé par la soupape d'alimentation (208) et/ou au volume minimal de transmission de fluide hydraulique pouvant être dosé par la soupape d'évacuation (216).

5. Système d'embrayage selon la revendication 3 ou 4, **caractérisé en ce que** l'intervalle de temps de référence est de l'ordre de grandeur d'un intervalle minimal de temps d'ouverture de la soupape d'alimentation (208) et/ou de la soupape d'évacuation (216) qui est imposé par le type de construction, ou correspond pour l'essentiel à cet intervalle minimal de temps d'ouverture, et **en ce que** l'intervalle minimal de temps d'ouverture de la soupape concernée détermine ou co-détermine le volume minimal de transmission de fluide hydraulique pouvant être dosé par cette soupape (208 ou 216), ou encore l'incrément minimal de volume de fluide hydraulique ou respectivement le décrément minimal de volume de fluide hydraulique pouvant être dosé par cette soupape (208 ou 216).

6. Système d'embrayage selon l'une quelconque des revendications 3 à 5, **caractérisé en ce que** l'unité de commande/régulation est conçue pour actionner les soupapes (208, 216) d'une manière mutuellement adaptée dans le temps de telle sorte que
- pour l'apport au cylindre récepteur (202) d'un incrément de volume de fluide hydraulique qui est inférieur à l'incrément minimal de volume de fluide hydraulique pouvant être dosé par la soupape d'alimentation (208),
- la soupape d'évacuation (216) est ouverte plus tard que la soupape d'alimentation (208) d'un intervalle de temps de décalage et/ou
- la soupape d'évacuation (216) est fermée plus tôt que la soupape d'alimentation (208) d'un intervalle de temps de décalage,
et/ou de telle sorte que
- pour l'évacuation du cylindre récepteur (202) d'un décrément de volume de fluide hydraulique qui est inférieur au décrément minimal de volume de fluide hydraulique pouvant être dosé par la soupape d'évacuation (216),
- la soupape d'alimentation (208) est ouverte plus tard que la soupape d'évacuation (216) d'un intervalle de temps de décalage et/ou
- la soupape d'alimentation (208) est fermée plus tôt que la soupape d'évacuation (216) d'un intervalle de temps de décalage.

7. Système d'embrayage selon la revendication 6, **caractérisé en ce que** l'intervalle de temps de décalage est nettement inférieur à l'intervalle minimal de temps d'ouverture de la soupape d'alimentation (208) et/ou de la soupape d'évacuation (216) qui est imposé par le type de construction.

8. Système d'embrayage selon l'une quelconque des revendications 1 à 7, **caractérisé en ce qu'**une unité/l'unité de commande/régulation du système d'embrayage est conçue pour, dans un état de fonctionnement de ventilation, maintenir ouvertes la soupape d'alimentation (208) et la soupape d'évacuation (216) pendant un intervalle de temps de ventilation afin de ventiler le cylindre récepteur, de sorte qu'est obtenu un flux de fluide hydraulique qui traverse le cylindre récepteur (202) ou s'écoule par un branchement du cylindre récepteur, et ventile le cylindre récepteur.

9. Système d'embrayage selon la revendication 8, **caractérisé en ce que** l'unité de commande/régulation est conçue pour, par un asservissement correspondant de la soupape d'alimentation (208) et/ou de la soupape d'évacuation (216) et/ou du dispositif (210, 212) d'approvisionnement en fluide hydraulique, produire des fluctuations de pression et/ou des fluctuations du débit volumique du flux de fluide hydraulique qui traverse le cylindre récepteur ou s'écoule par le branchement de ce dernier, afin d'assister la ventilation du cylindre récepteur.

10. Système d'embrayage selon l'une quelconque des revendications 1 à 9, **caractérisé en ce qu'**une unité/l'unité de commande/régulation du système d'embrayage est conçue pour, dans un état de fonctionnement de maintien, la soupape d'alimentation (208) étant fermée et la soupape d'évacuation (216) étant fermée, amener le dispositif (210, 212) d'approvisionnement en fluide hydraulique dans un état d'attente dans lequel le dispositif d'approvisionnement en fluide hydraulique consomme moins de puissance que dans un état d'apport de fluide hydraulique dans lequel du fluide hydraulique est apporté par l'intermédiaire de la soupape d'alimentation (208).

11. Système d'embrayage selon la revendication 1, **caractérisé en ce que** la soupape d'alimentation et/ou la soupape d'évacuation est (sont) pourvue(s) d'au moins un obturateur qui, afin de faire varier une surface de section d'ouverture, peut prendre des positions intermédiaires entre une position d'ouverture maximale et une position de fermeture.

12. Système d'embrayage selon l'une quelconque des revendications 1 à 11, **caractérisé en ce que** le cylindre récepteur est intégré dans un groupe d'éléments du dispositif d'embrayage (302) qui est conjointement rotatif en fonctionnement, et **en ce que** la soupape d'alimentation (208a, 208b) et la soupape d'évacuation (216a, 216b) sont disposées stationnairement. par rapport à ce groupe et sont raccordées au cylindre récepteur par l'intermédiaire d'une liaison tournante.

13. Système d'embrayage selon l'une quelconque des revendications 1 à 12, **caractérisé en ce que** le dispositif d'embrayage présente au moins un premier cylindre récepteur associé à un premier ensemble d'embrayage (304) et au moins un deuxième cylindre récepteur associé à un deuxième ensemble d'embrayage (306), **en ce que** l'ensemble de soupapes comprend au moins une première soupape d'alimentation (208a) disposée dans une liaison hydraulique entre le dispositif (210) d'approvisionnement en fluide hydraulique et le premier cylindre récepteur et au moins une première soupape d'évacuation (216a) séparée de la première soupape d'alimentation et disposée dans une liaison hydraulique entre le premier cylindre récepteur et le réceptacle (322) de fluide hydraulique, et **en ce que** l'ensemble de soupapes comprend au moins une deuxième soupape d'alimentation (208b) disposée dans une liaison hydraulique entre le dispositif (210) d'approvisionnement en fluide hydraulique et le deuxième cylindre récepteur et au moins une deuxième soupape d'évacuation (216b) séparée de la deuxième soupape d'alimentation et disposée dans une liaison hydraulique entre le deuxième cylindre récepteur et le réceptacle (322) de fluide hydraulique.

14. Système d'embrayage selon la revendication 13, **caractérisé en ce que** le premier ensemble d'embrayage (304) est associé à un premier arbre d'entrée de boîte (314) et le deuxième ensemble d'embrayage (306) à un deuxième arbre d'entrée de boîte (316) d'une boîte de vitesses commandée en charge.

15. Système d'embrayage selon l'une quelconque des revendications 1 à 14, **caractérisé en ce que** le dispositif d'embrayage présente au moins un ensemble d'embrayage (304, 306) à fonctionnement humide, notamment un ensemble d'embrayage (304, 306) à disques multiples.
